Europäisches Patentamt

European Patent Office

Office européen des brevets

(11) Publication number: **0 116 424**
**B1**

# EUROPEAN PATENT SPECIFICATION

(45) Date of publication of patent specification: **22.04.87**

(21) Application number: **84300448.2**

(22) Date of filing: **25.01.84**

(51) Int. Cl.⁴: **H 04 N 11/06**

(54) Television receivers.

(30) Priority: **31.01.83 GB 8302536**
**22.03.83 GB 8307849**

(43) Date of publication of application:
**22.08.84 Bulletin 84/34**

(45) Publication of the grant of the patent:
**22.04.87 Bulletin 87/17**

(84) Designated Contracting States:
**BE DE FR GB**

(56) References cited:
**EP-A-0 049 321**
**FR-A-2 236 327**

(73) Proprietor: **SONY CORPORATION**
**7-35 Kitashinagawa 6-Chome Shinagawa-ku
Tokyo 141 (JP)**

(72) Inventor: **Matsuura, Katsuji**
**143 Park Street**
**Bridgend Mid-Glamorgan Wales (GB)**
Inventor: **Evans, Christopher Neil**
**96 Heol Lewis**
**Rhiwbina Cardiff Wales (GB)**

(74) Representative: **Thomas, Christopher Hugo
et al**
**D Young & Co 10 Staple Inn
London WC1V 7RD (GB)**

## Description

This invention relates to television receivers, and more particularly is concerned with video signal polarity switching for positively and negatively modulated television signals.

In Europe, various different television signal modulation systems are used. In particular, the French broadcasting system (SECAM) is very different from the PAL systems used in other European countries, partly because the colour system is different, but more particularly because the video signal modulation polarity at radio frequency is opposite. The French system employs positive modulation, whereas others employ negative modulation, so even black and white television receivers cannot receive both systems without video polarity switching.

In order to receive both systems in a conventional multi-standard television receiver, either so-called mechanical switching or semi-automatic video signal polarity switching are usually used.

The above systems allocate a polarity switch for each preset channel, or for certain groups of channels. For example, if twelve channel presetters are provided there can be one switch for PAL channels 1 to 8 and another for SECAM channels 9 to 12, or there can be a two-condition selectable switch for each preset channel.

Both methods of standard switching may be replaced by electronic switching, but in either case there are still problems:

1) If only a few stations are received, then these stations may be several channels apart, for example:

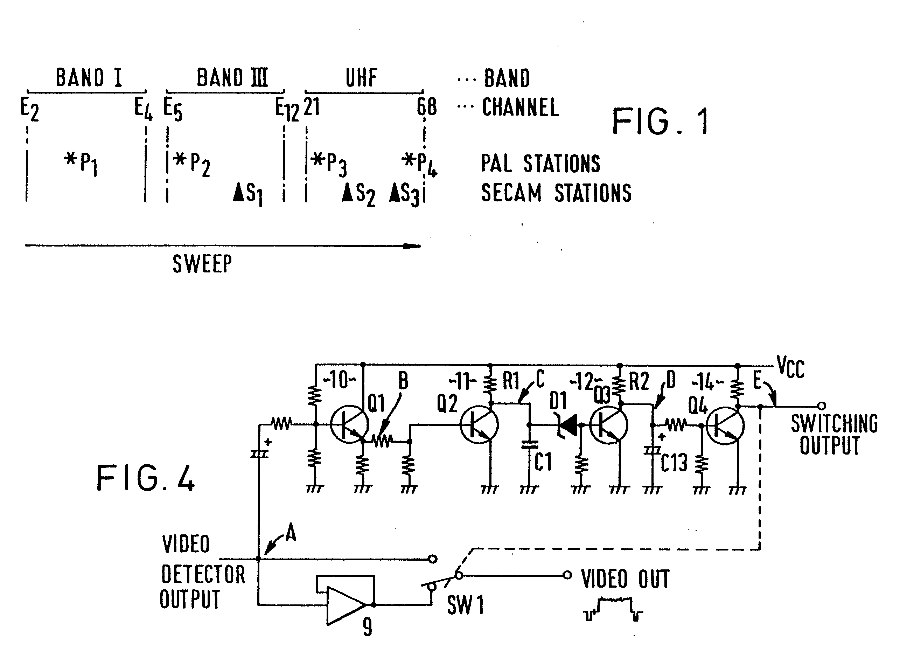

Channels 1 to 4 for receiving PAL stations (see Figure 1 of the accompanying drawings in which the locations of the PAL broadcasting stations are denoted by $P_1$ to $P_4$).

Channels 9 to 11 for receiving SECAM stations (see Figure 1 in which the locations of the SECAM broadcasting stations are denoted by $S_1$ to $S_3$).

2) The channel preset arrangement is not flexible.

3) It is difficult to use an automatic tuning circuit (like a voltage synthesizer or frequency synthesizer).

Moreover, if this system is used to memorize a station, channel searching is necessary through the broadcasting band from the lowest channel (see Figure 1, in this case from Band IE-2), to the highest channel (in this case UHF-68).

During the search all the signals which are received will be identified by a synchronous signal detector circuit, in order to pick up only television signals. This means that the signals from SECAM stations ($S_1$, $S_2$ and $S_3$) will be rejected or tuned incorrectly if the video polarity mode is set to PAL, because no correct synchronous signal will appear.

Hence, SECAM signals need to be tuned manually on certain of the preset channels later. This means that during the manufacture of television receivers, additional wiring is required to accept polarity switching between the tuning circuit and the video detector circuit. In addition to this, the channel tuning operation on the production line is complicated.

A television receiver according to the precharacterising part of claim 1 is disclosed in French patent specification FR—A—2 236 327.

According to the present invention there is provided a television receiver comprising:

a signal generator to generate a signal in dependence on a synchronizing signal in an incoming positively or negatively modulated composite video signal;

a detector for generating an output waveform in response to said signal of said signal generator, said output waveform having a relatively high level or a relatively low level depending on the modulation polarity of said incoming composite video signal; and

switching means to effect a control in dependence on said output waveform; characterised by:

said signal generator generating a sawtooth waveform, the peak value of said sawtooth waveform depending on whether said incoming composite video signal is positively or negatively modulated;

said detector generating said output waveform in response to said peak voltage of said sawtooth wave, during the field retrace period;

a smoothing circuit having a time constant which is long relative to the field period of said incoming composite video signal to smooth said output waveform over the field period of said incoming composite video signal and to generate an output in response to the level of said output waveform; and

said switching means effecting video modulation polarity switching of said receiver in dependence on said output of the smoothing circuit.

The switching means can also control one or more of the following:

1) Sound system switching (by providing different sound demodulators).

2) Colour system switching.

3) Television signal modulation system indicator control (PAL/SECAM).

4) Automatic gain control (AGC) switching.

In embodiments of the invention the automatic system switching circuit can be obtained by the addition of a simple circuit to the video detection output circuit. Therefore, any type of preset tuning system (including an automatic tuning system) can be connected without any modification to the tuning circuit. By using this circuit, the overall tuning circuit can be simplified both in the hardware and also in operation (either on the production line or for the user).

In one embodiment of the invention, the signal generator for generating a sawtooth wave comprises a first transistor, the detector comprises a zener diode and a second transistor, the smoothing circuit comprises a capacitor, and the switching means comprises a third transistor.

The invention will now be described by way of example with reference to the accompanying drawings, in which:

Figure 1 shows diagrammatically three wavebands and the disposition of PAL and SECAM broadcasting stations therein;

Figure 2 is a block diagram of an embodiment of television receiver according to the invention;

Figure 3 shows waveforms for explaining the embodiment; and

Figure 4 shows part of the embodiment in more detail.

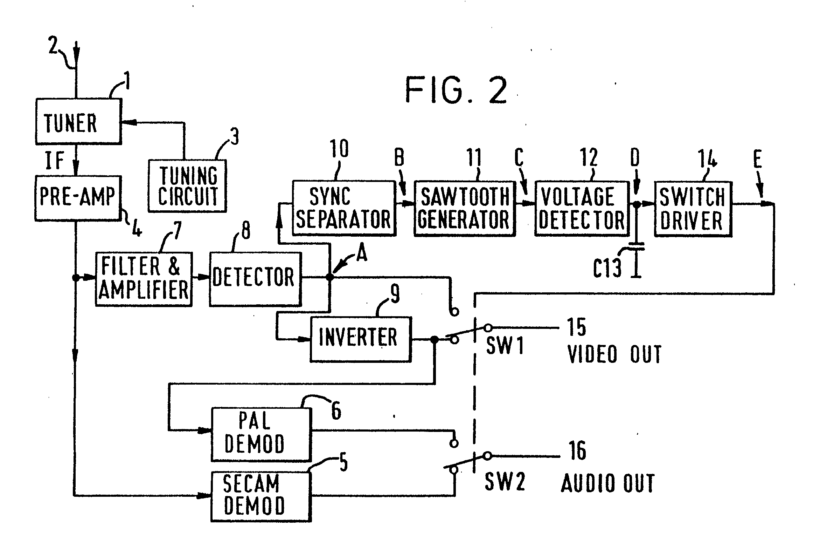

In Figure 2 the incoming radio frequency television signals are supplied to a tuner 1 from an aerial 2. The tuner 1 amplifies the incoming signals and converts them to a video intermediate frequency (IF) signal. A tuning voltage is supplied from a preset tuning circuit 3.

The video IF signal is amplified in a preamplifier 4 and supplied to a video IF amplifier and an audio IF demodulator or discriminator 5. A second audio IF demodulator or discriminator 6 is also provided.

To demodulate the audio component of the incoming signals, the two different audio demodulators 5 and 6 are necessary because of the audio modulation system difference between the European PAL system and the French SECAM system. In this case there is an amplitude modulation demodulator 5 for the SECAM system and a frequency modulation demodulator 6 for the PAL system. The video IF signal is processed through a filter and amplifier 7 and then detected by a video IF detector 8.

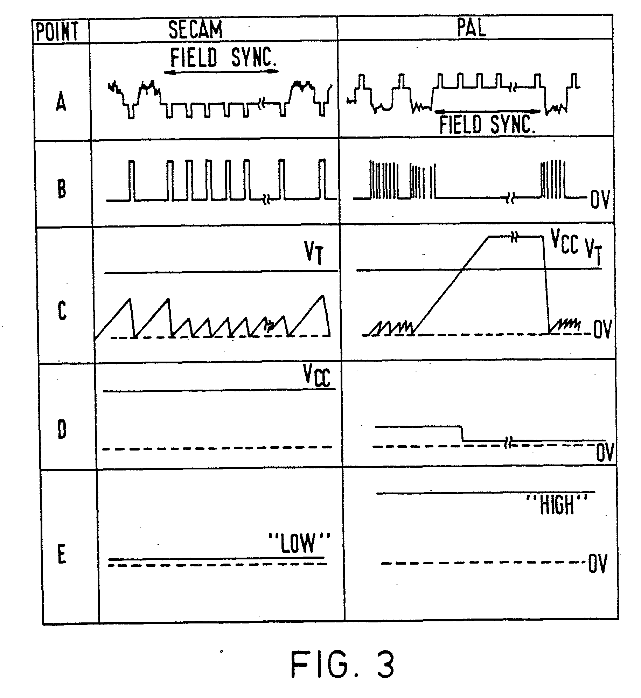

The output signal from the detector 8 (point A) is the so-called video detect out (composite video signal). This signal and an inverted video signal from an inverter 9 are supplied to a video polarity selection switch SW1, this being an analog switch. The inverted signal is also supplied to the audio demodulator 6. For example, if the video IF detector 8 is designed to produce a proper video signal, with a negative going sync pulse, on SECAM reception, the waveforms at the point A for SECAM and PAL reception are as shown in Figure 3.

At the point A, the polarity of the PAL and SECAM video signals are completely opposite, hence, a synchronous separator 10 supplies a proper sync pulse on SECAM reception and a random pulse output (although related to the white peak of the received picture) on PAL reception.

At point B, to identify the field retrace period on PAL reception, no picture information is inserted during the field pulse. This means that no pulse output can be obtained during this interval.

In the next stage a sawtooth generator 11 is controlled by the synchronous separator output pulse (point B), so that during the field sync period on PAL reception, the sawtooth generator output reaches power supply voltage (Vcc). A voltage detector 12 is set with a voltage threshold level $V_T$ (see point C in Figure 3) which is greater than the peak voltage of the sawtooth wave on SECAM reception, but less than the peak voltage of the sawtooth wave on PAL reception. A voltage detector 12 generates an output in response to the peak voltage of the sawtooth wave on PAL reception, during the field retrace period. Since the voltage detector 12 is set with the threshold voltage $V_T$, which is greater than the peak voltage of the sawtooth wave on SECAM reception, the detector 12 does not respond to SECAM signals. Therefore, the output of the detector 12 switches according to the signal system received. By this switching a smoothing circuit comprising a capacitor C13, which is connected between the detector 12 and earth, can be discharged by the detector 12, thereby switching an access switch driver 14. The time constant to charge up the capacitor C13 is set to be quite long (say 200 to 300 mS) compared with the vertical scanning frequency (20 mS) or field frequency, hence during PAL reception the point D is not coupled to the access switch driver 14.

In this condition the video signal appears at an output 15 through the inverter 9. At the same time, the PAL audio signal can also be selected by a switch SW2 which is controlled by the same switch driver 14, so that the audio signal appears at an output 16.

In the detailed circuit shown in Figure 4, the synchronous signal separator 10 comprises a transistor Q1, the sawtooth generator 11 comprises a transistor Q2, and the voltage detector 12, which comprises a zener diode D1, is arranged to drive a switching transistor Q3 coupled to the smoothing capacitor C13. The switch driver 14 comprises a transistor Q4.

The sawtooth wave is generated by a resistor R1 and a capacitor C1. When the sync pulse is applied to the base of the transistor Q2 it is turned on and discharges the capacitor C1. After the pulse has ended, the transistor Q2 will be turned off and the capacitor C1 will start to charge up via the resistor R1. The sawtooth peak voltage should be set at about half of the voltage of the power supply voltage (Vcc) at line frequency, which can be set by the R1/C1 time constant.

The sawtooth peak voltage, for SECAM receptions, should be set lower than the zener voltage of the diode D1, so that the diode D1 only breaks down when the wrong polarity video signal (PAL) is received, that is, during the PAL field retrace pulse period.

When the diode D1 breaks down, the transistor Q3 is turned on by the breakdown current of the diode D1 and discharges the capacitor C13. After the field sync pulse has finished, the diode D1 and the transistor Q3 are turned off and the capacitor C13 starts to charge up through a resistor R2, but the time constant C13/R2 is long compared with the field frequency so that the voltage across the capacitor C13 cannot increase sufficiently to turn on the transistor Q4. As a result the transistor Q4 stays off and the switch remains in the PAL mode. When SECAM is received, the diode D1 does not break down and so the transistor Q3 is not switched on. Hence, the capacitor C13 is charged up and the transistor Q4 is switched on, so that the switching output is low.

The overall action is that the switching output (point E) from the transistor Q4 is "low" on SECAM and "high" on PAL reception.

Although this embodiment shows the SECAM signal set to the proper polarity at the output of the detector 8, the opposite case (PAL signal set to get proper polarity) can also apply.

## Claims

1. A television receiver comprising:

a signal generator (11) to generate a signal in dependence on a synchronizing signal in an incoming positively or negatively modulated composite video signal;

a detector (P12) for generating an output waveform in response to said signal of said signal generator (11), said output waveform having a relatively high level or a relatively low level depending on the modulation polarity of said incoming composite video signal; and

switching means (SW1, SW2) to effect a control in dependence on said output waveform; characterised by:

said signal generator (11) generating a sawtooth waveform, the peak value of said sawtooth waveform depending on whether said incoming composite video signal is positively or negatively modulated;

said detector (12) generating said output waveform in response to said peak voltage of said sawtooth wave, during the field retrace period;

a smoothing circuit (C13) having a time constant which is long relative to the field period of said incoming composite video signal to smooth said output waveform over the field period of said incoming composite video signal and to generate an output in response to the level of said output waveform; and

said switching means (SW1, SW2) effecting video modulation polarity switching of said receiver in dependence on said output of the smoothing circuit.

2. A television receiver according to claim 1 wherein said switching means (SW1, SW2) also effects sound system switching.

3. A television receiver according to claim 1 or claim 2 wherein said switching means (SW1, SW2) also effects colour system switching.

4. A television receiver according to claim 1, claim 2 or claim 3 wherein said switching means (SW1, SW2) also effects control of a television signal modulation system indicator.

5. A television receiver according to any one of the preceding claims wherein said switching means (SW1, SW2) also effects automatic gain control switching.

6. A television receiver according to any one of the preceding claims wherein said signal generator (11) comprises a first transistor (Q2), said detector (12) comprises a zener diode (D1) and a second transistor (Q3), said smoothing circuit (C13) comprises a capacitor (C13), and said switching means (SW1, SW2) comprises a third transistor (Q4).

7. A television receiver according to any one of the preceding claims wherein the negatively modulated composite video signals are of the PAL system, and the positively modulated signals are of the SECAM system.

## Patentansprüche

1. Fernsehempfänger

mit einem Signalgenerator (11) zur Erzeugung eines Signals in Abhängigkeit von einem in einem ankommenden positiv oder negativ modulierten Video-Signalgemisch vorhandenen Synchronisierungssignal,

mit einem Detektor (12) zur Erzeugung einer Ausgangswellenform in Abhängigkeit von dem Signal des Signalgenerators (11), wobei diese Ausgangswellenform in Abhängigkeit von der Modulationspolarität des ankommenden Video-Signalgemischs einen vergleichsweise hohen oder einen vergleichsweise niedrigen Pegel hat,

sowie mit Schaltmitteln (SW1, SW2) zur Durchführung einer Umschaltung in Abhängigkeit von der genannten Ausgangswellenform, dadurch gekennzeichnet,

daß der Signalgenerator (11) ein sägezahnförmiges Signal erzeugt, dessen Spitzenwert davon abhängt, ob das ankommende Video-Signalgemisch positiv oder negativ moduliert ist,

daß der genannte Detektor (12) die Ausgangswellenform während der Bildrücklaufperiode in Abhängigkeit von der Spitzenspannung des sägezahnförmigen Signal erzeugt,

daß eine Glättungsschaltung (C13) mit einer gegenüber der Bildperiodendauer des ankommenden Video-Signalgemischs großen Zeitkonstanten die Ausgangswellenform über diese Bildperiodendauer glättet und in Abhängigkeit von dem Pegel der Ausgangswellenform ein Ausgangssignal erzeugt,

und daß die genannten Schaltmittel (SW1, SW2) in Abhängigkeit von dem Ausgangssignal der Glättungsschaltung eine Umschaltung der Video-Modulationspolarität des Fernsehempfängers bewirken.

2. Fernsehempfänger nach Anspruch 1, bei dem die Schaltmittel (SW1, SW2) ferner eine Umschaltung des Tonsystems bewirken.

3. Fernsehempfänger nach Anspruch 1 oder 2, bei dem die Schaltmittel (SW1, SW2) ferner eine Umschaltung des Farbsystems bewirken.

4. Fernsehempfänger nach Anspruch 1, 2 oder 3, bei dem die Schaltmittel (SW1, SW2) ferner die Steuerung eines Indikators für das Fernsehsignal-Modulationssystem bewirken.

5. Fernsehempfänger nach einem der vorhergehenden Ansprüche, bei dem die Schaltmittel (SW1, SW2) ferner die Umschaltung einer automatischen Verstärkungsgradsteuerung bewirken.

6. Fernsehempfänger nach einem der vorhergehenden Ansprüche, bei dem

der genannte Signalgenerator (11) einen ersten Transistor (Q2),

der Detektor (10) eine Zenerdiode (D1) und einen zweiten Transistor (Q3),

die Glättungsschaltung (C13) einen Kondensator (C13)

und die Schaltmittel (SW1, SW2) einen dritten Transistor (Q4) beinhalten.

7. Fernsehempfänger nach einem der vorhergehenden Ansprüche, bei dem die negativ modulierten Video-Signalgemische Signale des PAL-Systems und die positiv modulierten Video-Signalgemische Signale des SECAM-Systems sind.

**Revendications**

1. Récepteur de télévision comportant: un générateur de signal (11) destiné à produire un signal en fonction d'un signal de synchronisation dans un signal vidéo composite entrant modulé dans le sens positif ou le sens négatif; un détecteur (12) destiné à produire une forme d'onde de sortie en réponse audit signal dudit générateur de signal (11), ladite forme d'onde de sortie ayant un niveau relativement haut ou un niveau relativement bas en fonction de la polarité de modulation dudit signal vidéo composite entrant; et un dispositif de commutation (SW1, SW2) destiné à assurer une commande en fonction de ladite forme d'onde de sortie; caractérisé en ce que: ledit générateur de signal (11) produit une forme d'onde en dents de scie, la valeur de crête de ladite forme d'onde en dents de scie différant suivant que ledit signal vidéo composite entrant est modulé dans le sens positif ou le sens négatif; en ce que ledit détecteur (12) produit ladite forme d'onde de sortie en réponse à ladite tension de crête de ladite onde en dents de scie pendant la période de retour de trame; en ce qu'un circuit de filtrage C13 est prévu, ayant une constante de temps qui est longue par rapport à la période de trame dudit signal vidéo composite entrant, pour filtrer ladite forme d'onde de sortie dans la période de trame dudit signal vidéo composite entrant et produisant une sortie au niveau de ladite forme d'onde de sortie; et en ce que ledit dispositif de commutation (SW1, SW2) effectue une commutation de polarité de modulation vidéo dudit récepteur en fonction de ladite sortie du circuit de filtrage.

2. Récepteur de télévision selon la revendication 1, dans lequel ledit dispositif de commutation (SW1, SW2) effectue également une commutation de système sonore.

3. Récepteur de télévision selon la revendication 1 ou la revendication 2, dans lequel le dispositif de commutation (SW1, SW2) effectue également une commutation de système de couleur.

4. Récepteur de télévision selon la revendication 1, la revendication 2 ou la revendication 3, dans lequel ledit dispositif de commutation (SW1, SW2) effectue également une commande d'un indicateur de système de modulation de signal de télévision.

5. Récepteur de télévision selon l'une quelconque des revendications précédentes, dans lequel ledit dispositif de commutation (SW1, SW2) effectue également une commutation de commande automatique de gain.

6. Récepteur de télévision selon l'une quelconque des revendications précédentes, dans lequel ledit générateur de signal (11) comporte un premier transistor (Q2), ledit détecteur (12) comporte une diode Zéner (D1) et un second transistor (Q3), ledit circuit de filtrage (C13) comporte un condensateur (C13) et ledit dispositif de commutation (SW1, SW2) comporte un troisième transistor (Q4).

7. Récepteur de télévision selon l'une quelconque des revendications précédentes, dans lequel les signaux vidéo composite modulés dans le sens négatif sont du système PAL et les signaux modulés dans le sens positif sont du système SECAM.

0 116 424

BAND I ··· BAND

E2      E4 E5      E12 21      68 ··· CHANNEL

BAND III      UHF

# FIG. 1

*P1    *P2    *P3    *P4    PAL STATIONS

▲S1    ▲S2 ▲S3    SECAM STATIONS

SWEEP

Vcc

-10-   B   -11- R1 C   D1 -12- Q3 R2 D   -14- E

Q1    Q2      Q4

SWITCHING OUTPUT

# FIG. 4

C1    C13

VIDEO DETECTOR OUTPUT

A

VIDEO OUT

9    SW1

# FIG. 2

0 116 424

FIG. 3

3